# EUROPEAN PATENT APPLICATION

(11) **EP 4 520 985 A1**
(43) Date of publication of application: **12.03.2025**
(21) Application number: 22969060.7
(22) Date of filing: 28.12.2022
(51) Int. Cl.: F16C 17/02, F16C 27/02, F16C 37/00

(54) **AIR BEARING**

(30) Priority: 21.12.2022 CN 202211647805
(71) Applicant: CRRC Zhuzhou Electric Co., Ltd., Zhuzhou, hunan 412000 (CN)
(72) Inventor: LIU, Wanhui, Zhuzhou, Hunan 412000 (CN); WAN, Dexin, Zhuzhou, Hunan 412000 (CN); XIONG, Haoli, Zhuzhou, Hunan 412000 (CN); CHEN, Guo, Zhuzhou, Hunan 412000 (CN); YU, Rui, Zhuzhou, Hunan 412000 (CN); ZHAO, Xueyuan, Zhuzhou, Hunan 412000 (CN)
(74) Representative: Behr, Wolfgang
(86) International application number: PCT/CN2022/143023
(87) International publication number: WO 2024/130773

(57) **Abstract**

An air bearing, comprising: a housing which is provided with a through hole, first strip-shaped grooves being formed in the inner wall of the through hole; a shaft sleeve which is inserted into the through hole, second strip-shaped grooves being formed in the outer wall of the shaft sleeve, and the first strip-shaped grooves being arranged corresponding to the second strip-shaped grooves; a rotating shaft which is rotatably inserted into the shaft sleeve; and strip-shaped damping blocks which are located between the housing and the shaft sleeve and have different parts respectively clamped in the first strip-shaped grooves and the second strip-shaped grooves, the strip-shaped damping blocks being arranged in the axial direction of the through hole, so as to absorb vibration energy generated by the rotating shaft when subjected to a disturbing force during rotation. Thus, when the rotating shaft is subjected to external disturbance, the disturbing force is transmitted to the shaft sleeve by means of an air film, and further to the strip-shaped damping blocks, so that the strip-shaped damping blocks deform, and energy brought by a disturbing force is converted into thermal energy for gradual dissipation into the environment, thereby making the rotating shaft return to stable rotation.

## Description

The present application claims the priority to Chinese Patent Application No. 202211647805.6, titled "AIR BEARING", filed with the China National Intellectual Property Administration on December 21, 2022, the entire content of which is incorporated herein by reference.

### FIELD

The present application relates to the technical field of machinery, and in particular to a gas bearing.

### BACKGROUND

Bearings are important components for supporting rotating mechanical bodies. Common types of the bearings include rolling bearings, oil-lubricated bearings, magnetic bearings and gas bearings. When rotating at high speeds in high-temperature environments, the rolling bearings have a shorter lifespan at high-speed rotation. The oil-lubricated bearings experience high friction torque and power consumption at high-speed rotation due to high viscosity of the lubricating oil, and the oil may decompose or even combust at high temperatures. The magnetic bearings require highly complex control during high-speed rotation, and electronic components are not suitable for high-temperature operating conditions. Gas bearings use gas as the lubricating medium, which has a viscosity much lower than that of the lubricating oil used in the conventional oil-lubricated bearings. This makes the gas bearings highly suitable for high-speed rotating machinery. Additionally, the characteristics of the gas generally change little at high temperatures, avoiding problems of decomposition or combustion. Therefore, the gas bearings are suitable for high-temperature applications.

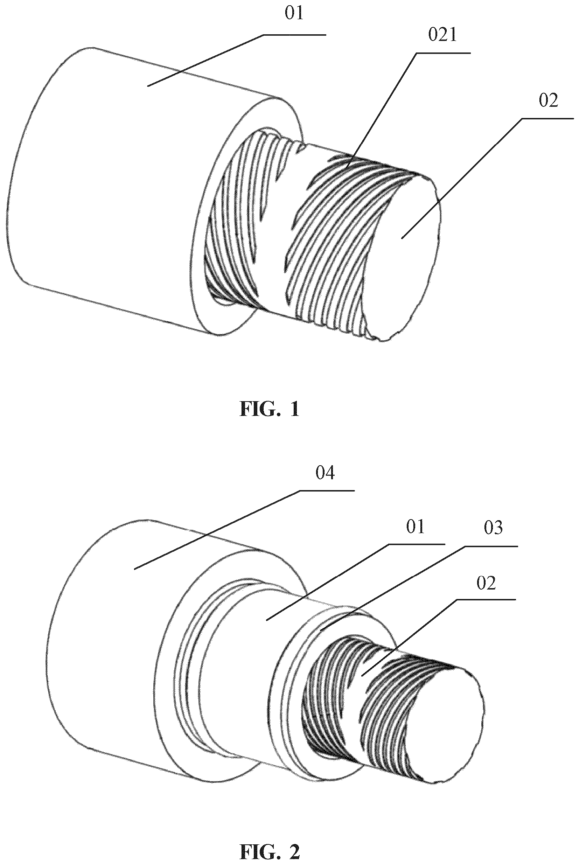

Spiral groove gas bearings are a widely used type of aerodynamic bearings. As shown in FIG. 1 in the specification, a spiral groove radial aerodynamic bearing, as a type of aerodynamic bearings applied to a high-speed rotating device, mainly consists of a bushing 01 and a rotating shaft 02 with spiral grooves 021 engraved on a surface thereof. The spiral grooves 021 may alternatively be provided on the bushing 01, and there is a gap, i.e., a bearing clearance, between the shaft and the bushing. When a rotor rotates at high speeds, ambient gas is sucked into the bearing clearance due to the pumping effect of the spiral grooves 021, and the lubricating gas between the rotating shaft 02 and the bushing 01 generates a pressure, i.e., a high-pressure area is formed between the rotating shaft and the bushing. The high-pressure area supports the rotating shaft 02, levitating it in the lubricating gas without contacting or rubbing against the bushing 01. However, due to the relatively low viscosity of the gas, the damping of the aerodynamic bearing only comes from mutual friction between lubricating gas molecules, resulting in poor damping characteristics and low load capacity thereof. Under external disturbances, the rotating shaft 01 is prone to instability or rubbing, which may easily cause bearing failure and damage.

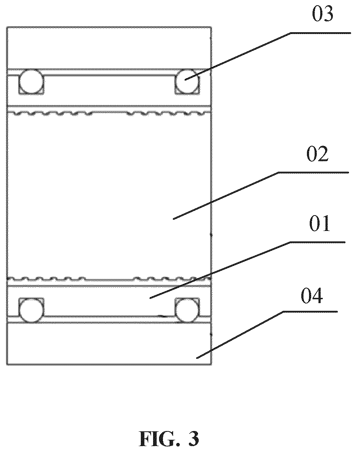

As shown in FIGS. 2 and 3 in the specification, in the conventional technology, two grooves are provided at ends of the bushing 01, and O-rings 03 are mounted in the grooves between the bushing 01 and a stationary housing 04. When the bearing is in operation, the rotating shaft 02 rotates at high speeds, and the ambient gas is pumped into the gap between the rotating shaft 02 and the bushing 01 by the spiral grooves 021 to form a high-pressure gas film to levitate the rotor. When the rotating shaft 02 is subjected to an external disturbance, a disturbing force is transmitted to the bushing 01 via the high-pressure gas film of the bearing, and the vibration of the bushing 01 causes the O-rings 03 to deform. The repeated deformation and recovery of the O-rings 03 dissipate the energy transmitted from the disturbance, making the disturbance gradually decrease, so that the rotating shaft 02 returns to stable rotation. However, the O-rings 03 are made of rubber materials which cannot be used in high-temperature environments or for a long time in some corrosive environments.

In summary, a problem to be solved by those skilled in the art is how to provide a gas bearing that can stably rotate in high-temperature and corrosive environments.

### SUMMARY

In view of this, an object of the present application is to provide a gas bearing which can stably rotate in high-temperature and corrosive environments.

In order to achieve the above object, the present application provides the following technical solutions. The gas bearing includes a housing, a bushing, a rotating shaft and a strip-shaped damper.

The housing is provided with a through-hole, and an inner wall of the through-hole is provided with a first strip-shaped groove.

The bushing is inserted in the through-hole, and an outer wall of the bushing is provided with a second strip-shaped groove. The first strip-shaped groove is arranged in correspondence with the second strip-shaped groove.

The rotating shaft is rotatably inserted in the bushing.

The strip-shaped damper is located between the housing and the bushing, and different parts of the strip-shaped damper are respectively engaged in the first strip-shaped groove and the second strip-shaped groove. The strip-shaped damper is arranged along an axial direction of the through-hole to absorb vibration energy generated by the rotating shaft when subjected to a disturbing force during rotation.

In some gas bearings, an inner surface of the bushing or an outer surface of the rotating shaft is provided with a slot of a regular shape.

In some gas bearings, the first strip-shaped groove runs from one end face to the other end face of the housing, and the second strip-shaped groove runs from one end to the other end of the outer wall of the bushing.

In some gas bearings, a top surface of the strip-shaped damper is in contact with a bottom surface of the first strip-shaped groove, and a bottom surface of the strip-shaped damper is in contact with a bottom surface of the second strip-shaped groove.

In some gas bearings, the strip-shaped damper is in interference fit with the first strip-shaped groove and the second strip-shaped groove.

In some gas bearings, a plurality of the strip-shaped dampers, a plurality of the first strip-shaped grooves, and a plurality of the second strip-shaped grooves are same in number, and are distributed and spaced apart in a circumferential direction.

In some gas bearings, the gas bearing further includes two end caps that are provided on the two end faces of the housing respectively.

In some gas bearings, each of the two end caps is provided with a plurality of arc-shaped grooves running from one end face to the other end face of the end cap, and the plurality of arc-shaped grooves are spaced apart in the circumferential direction.

In some gas bearings, the end caps are threadedly connected to the housing.

Compared with the conventional technology, the gas bearing according to the present application includes the housing, the bushing, the rotating shaft, the strip-shaped dampers and the end caps. The bushing is inserted in the housing, and the rotating shaft rotates in the bushing. The strip-shaped dampers are engaged and fixed between the housing and the bushing, and the end caps are respectively fixed on the two end faces of the housing. In this way, when the rotating shaft is subjected to an external disturbance, the disturbance force is transmitted to the bushing via a gas film and is further transmitted to the strip-shaped dampers, making the strip-shaped dampers deform. During the deformation of the strip-shaped dampers, the metal fine wires inside the strip-shaped dampers rub against each other, gradually dissipating the energy of the disturbing force. The energy is converted into heat and dissipated into the environment, so that the rotating shaft returns to stable rotation.

Furthermore, the strip-shaped dampers are arranged along the axial direction of the housing, and each end cap is provided with the arc-shaped grooves, so that a cooling channel may be formed to accelerate heat dissipation. In addition, the strip-shaped dampers are made of high-temperature-resistant and corrosion-resistant materials, allowing the gas bearing to be used in high-temperature and corrosive environments. In this way, the gas bearing with the added strip-shaped dampers is simple in structure and easy to produce and process, and has good manufacturability and economic efficiency.

### BRIEF DESCRIPTION OF THE DRAWINGS

In order to more clearly illustrate the technical solutions in the embodiments of the present application or in the conventional technology, the accompanying drawings used in the description of the embodiments or the conventional technology will be briefly described hereinafter. It is apparent that the accompanying drawings in the following description are only some of the embodiments of the present application, and based on these accompanying drawings, other accompanying drawings may be obtained by those skilled in the art without creative efforts.
FIG. 1 is a structural view of a gas bearing according to the conventional technology;
FIG. 2 is a structural view of a gas bearing with O-rings according to the conventional technology;
FIG. 3 is a cross-sectional view of the gas bearing with the O-rings according to the conventional technology;
FIG. 4 is a structural view of a gas bearing according to the present application; and
FIG. 5 is a side view of the gas bearing according to the present application.

**Reference numerals:**

| | | | |
|---|---|---|---|
| 01 | bushing; | 02 | rotating shaft; |
| 021 | spiral groove; | 03 | O-ring; |
| 04 | housing; | 1 | housing; |
| 11 | through-hole; | 12 | first strip-shaped groove, |
| 2 | bushing; | 21 | second strip-shaped groove; |
| 3 | rotating shaft; | 4 | strip-shaped damper; |
| 5 | end cap; | 51 | arc-shaped groove; |
| 6 | screw. | | |

### DETAILED DESCRIPTION OF THE EMBODIMENTS

The technical solutions in the embodiments of the present application will be described clearly and completely hereinafter in conjunction with the accompanying drawings in the embodiments of the present application. It is apparent that the described embodiments are only some of the embodiments of the present application, rather than all of the embodiments. Based on the embodiments in the present application, all other embodiments obtained by those skilled in the art without creative work will fall within the protection scope of the present application.

In order to enable those skilled in the art to better understand the solutions of the present application, the present application will be further described in detail hereinafter in conjunction with the accompanying drawings and specific embodiments.

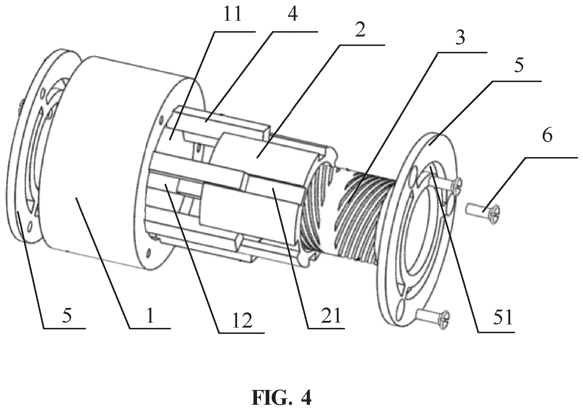

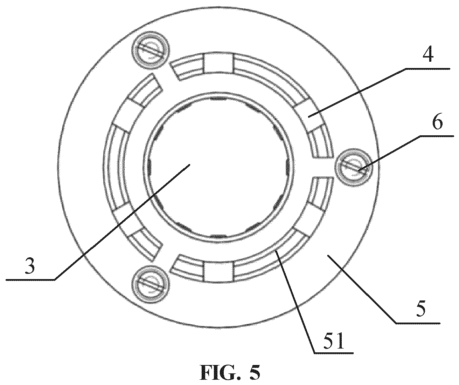

Referring to FIGS. 4 and 5 in the specification, a gas bearing is provided in an embodiment of the present application, including: a housing 1 provided with a through-hole 11, a bushing 2 inserted in the through-hole 11, a rotating shaft 3 rotatably inserted in the bushing 2, and a strip-shaped damper 4, which is engaged and fixed between the housing 1 and the bushing 2 and is arranged along an axial direction of the housing 1 to absorb vibration energy generated by the rotating shaft 3 when subjected to a disturbing force during rotation.

An outer diameter of the bushing 2 is slightly smaller than a diameter of the through-hole 11, so that when the bushing 2 is inserted into the through-hole 11, there is a gap between the bushing 2 and the housing 1. The strip-shaped damper 4 releases heat while absorbing the vibration energy generated by the rotating shaft 3 when subjected to the disturbing force during rotation. The strip-shaped damper 4 arranged along the axial direction may better dissipate heat through the gap. A ventilation system may be provided on an end face of the housing 1 to accelerate the cooling of the gas bearing.

An inner surface of the bushing 2 or an outer surface of the rotating shaft 3 is provided with a slot of a regular shape, which may be regarded as the spiral groove 021 in the conventional technology. When the rotating shaft 3 rotates at a high speed, due to the pumping effect of the spiral groove 021, ambient gas is pumped into a bearing clearance between the rotating shaft 3 and the bushing 2 to form a high-pressure area to support a rotor. When the rotating shaft 3 is subjected to an external disturbance, the disturbing force is transmitted to the bushing 2 via a gas film and is further transmitted to the strip-shaped damper 4, making the strip-shaped damper 4 deform under the force. During the deformation of the strip-shaped damper 4, mutual frictions occur inside the strip-shaped damper 4, gradually dissipating the energy of the vibration disturbing force. The energy is converted into heat and dissipated into the environment, so that the rotating shaft 3 returns to stable rotation.

As shown in FIG. 4 in the specification, the housing 1 is provided with a first strip-shaped groove 12 along the axial direction, and the first strip-shaped groove 12 runs from one end face to the other end face of the housing 1. The first strip-shaped groove 12 is in communication with the through-hole 11, and is provided on an inner wall of the housing 1. The first strip-shaped groove 12 runs from the one end face to the other end face of the housing 1, which facilitates the insertion of the strip-shaped damper 4 from an end of the groove. The bushing 2 is provided with a second strip-shaped groove 21 along the axial direction. The second strip-shaped groove 21 is arranged on and passes through an outer wall of the bushing 2. The second strip-shaped groove 21 passes through the outer wall of the bushing 2, which facilitates the insertion of the strip-shaped damper 4 from an end of the groove.

When the first strip-shaped groove 12 is aligned with the second strip-shaped groove 21, the strip-shaped damper 4 is engaged and fixed to the first strip-shaped groove 12 and the second strip-shaped groove 21. A top surface of the strip-shaped damper 4 is in contact with a bottom surface of the first strip-shaped groove 12, and a bottom surface of the strip-shaped damper 4 is in contact with a bottom surface of the second strip-shaped groove 21.

The second strip-shaped groove 21 and the first strip-shaped groove 12 cooperate with each other to provide space for the strip-shaped damper 4. Therefore, the first strip-shaped groove 12 and the second strip-shaped groove 21 have the same width, and depths of the first strip-shaped groove 12 and the second strip-shaped groove 21 are determined based on the strip-shaped damper 4. Since there is a gap between the bushing 2 and the housing 1, a sum of the depths of the second strip-shaped groove 21 and the first strip-shaped groove 12 is slightly smaller than a height of the strip-shaped damper 4. Certainly, specific dimensions of the second strip-shaped groove 21 and the first strip-shaped groove 12 may be determined according to actual situations.

The strip-shaped damper 4 is in interference fit with the first strip-shaped groove 12 and the second strip-shaped groove 21. It may be understood that, a size of the strip-shaped damper 4 is slightly larger than sizes of the first strip-shaped groove 12 and the second strip-shaped groove 21. The strip-shaped damper 4 is inserted into both the first strip-shaped groove 12 and the second strip-shaped groove 21 along the axial direction. The cooperation between the strip-shaped damper 4 and each of the first strip-shaped groove 12 and the second strip-shaped groove 21 generates a pre-tightening force therebetween, which ensures that the bushing 2 does not rotate when the rotating shaft 3 rotates, thus enhancing the structural stability of the gas bearing. The pre-tightening force may also improve the energy dissipation ability of the strip-shaped damper 4.

The strip-shaped damper 4, the first strip-shaped groove 12 and the second strip-shaped groove 21 are provided in equal numbers and are in multiples. The multiple strip-shaped dampers 4, the multiple first strip-shaped grooves 12 and the multiple second strip-shaped grooves 21 are distributed and spaced apart in a circumferential direction. The strip-shaped dampers 4, the first strip-shaped grooves 12 and the second strip-shaped grooves 21 are provided in multiples, which facilitates the dissipation of the energy transmitted from the vibration disturbing force. The strip-shaped dampers 4 are distributed at intervals, so that the gap between the housing 1 and the bushing 2 is present between any two adjacent strip-shaped dampers 4, thereby facilitating dissipation of the heat generated by the strip-shaped dampers 4. That is, the strip-shaped dampers 4 are arranged at intervals in the circumferential direction of the housing 1, so that cooling gasflow may pass through the gap between the housing 1 and the bushing 2 to accelerate heat dissipation.

In the embodiment according to the present application, the number of the strip-shaped dampers 4 is six. Certainly, the number of the strip-shaped dampers 4 may be specifically determined based on actual situations, which is not limited herein.

The gas bearing further includes two end caps 5, which are provided on the two end faces of the housing 1 respectively. The end caps 5 can prevent the strip-shaped dampers 4 from moving axially during the operation of the gas bearing, thus limiting the strip-shaped dampers 4. In addition, when the strip-shaped dampers 4 are deformed under the force, the end caps 5 can prevent excessive axial deformations of the strip-shaped dampers 4.

Each of the end caps 5 is provided with multiple arc-shaped grooves 51, which run from one end face to the other end face of the end cap 5. The multiple arc-shaped grooves 51 are evenly distributed in the circumferential direction.

The arc-shaped grooves 51 provided on the end caps 5 are used for the ventilation of the gas bearing in the axial direction of the housing 1. The arc-shaped grooves 51 provided on the two end caps 5 are the same, and when the end caps 5 are mounted, the arc-shaped grooves 51 on a left side are aligned with the arc-shaped grooves 51 on a right side in the axial direction. The gasflow enters from the arc-shaped grooves 51 on one side, passes through the gap formed between two adjacent strip-shaped dampers 4 and between the housing 1 and the bushing 2, and finally flows out of the arc-shaped grooves 51 on the other side. In this way, the heat dissipation of the strip-shaped dampers 4 can be accelerated, and meanwhile the gas bearing and a motor can be cooled. In the embodiment according to the present application, the number of the multiple arc-shaped grooves 51 is three. Certainly, the number of the multiple arc-shaped grooves 51 may be specifically determined based on actual situations, which is not limited herein.

As shown in FIG. 5 in the specification, the end caps 5 are threadedly connected to the housing 1. The threaded connections are simple in structure and easy to dismount and mount, and are safe and reliable. Certainly, the end caps 5 may alternatively be connected to the housing 1 by other means, which are not limited herein.

The strip-shaped dampers 4 may have metal mesh structures. Alternatively, they may be made of other types of high-temperature-resistant and corrosion-resistant materials. The metal mesh material is formed by multiple metal fine wires which are intertwined and pressed. When the metal mesh is compressed, the metal fine wires rub against each other, thereby dissipating energy. The strip-shaped dampers 4 effectively improve the damping characteristics and stability of the gas bearing. In addition, the high-temperature resistance of the metal mesh allows the gas bearing according to the present application to be applied to high-speed and high-temperature conditions, such as a turbocharger, a micro fuel turbine, a turbine generator, and the like. Moreover, the metal mesh material has corrosion-resistant properties, so that the gas bearing may be applied in corrosive environments, such as a rotating device in the chemical industry. In addition, the metal mesh material has low manufacturing costs, which hardly increases the cost of the bearing, leading to good economic efficiency.

The gas bearing is assembled in the following processes. The bushing 2 is inserted into the through-hole 11 of the housing 1, and is rotated so that the first strip-shaped grooves 12 are aligned with the second strip-shaped grooves 21. The multiple strip-shaped dampers 4 are inserted into the first strip-shaped grooves 12 and the second strip-shaped grooves 21, and the rotating shaft 3 is inserted into the bushing 2. The end caps 5 are respectively mounted on the two end faces of the housing 1 by screws 6.

It should be noted that in this specification, relational terms such as first and second are only used to distinguish one entity from another entity, and do not necessarily require or imply that there are any such actual relationships or sequences between these entities.

The gas bearing according to the present application is described in detail hereinabove. Specific embodiments are used herein to describe the principles and implementations of the present application, and the description of the above embodiments is only used to facilitate understanding of the method and the core idea of the present application. It should be noted that, those skilled in the art may make several improvements and modifications to the present application without departing from the principles of the present application, and these improvements and modifications shall fall within the protection scope of the claims of the present application.

## Claims

1. A gas bearing, comprising:
a housing (1), provided with a through-hole (11), wherein an inner wall of the through-hole (11) is provided with a first strip-shaped groove (12);
a bushing (2), inserted in the through-hole (11), wherein an outer wall of the bushing (2) is provided with a second strip-shaped groove (21), and the first strip-shaped groove (12) is arranged in correspondence with the second strip-shaped groove (21);
a rotating shaft (3), rotatably inserted in the bushing (2); and
a strip-shaped damper (4), located between the housing (1) and the bushing (2), wherein different parts of the strip-shaped damper (4) are respectively engaged in the first strip-shaped groove (12) and the second strip-shaped groove (21), and the strip-shaped damper (4) is arranged along an axial direction of the through-hole (11) to absorb vibration energy generated by the rotating shaft (3) when subjected to a disturbing force during rotation.

2. The gas bearing according to claim 1, wherein an inner surface of the bushing (2) or an outer surface of the rotating shaft (3) is provided with a slot of a regular shape.

3. The gas bearing according to claim 1, wherein the first strip-shaped groove (12) runs from one end face to the other end face of the housing (1), and the second strip-shaped groove (21) runs from one end to the other end of the outer wall of the bushing (2).

4. The gas bearing according to claim 3, wherein a top surface of the strip-shaped damper (4) is in contact with a bottom surface of the first strip-shaped groove (12), and a bottom surface of the strip-shaped damper (4) is in contact with a bottom surface of the second strip-shaped groove (21).

5. The gas bearing according to claim 4, wherein the strip-shaped damper (4) is in interference fit with the first strip-shaped groove (12) and the second strip-shaped groove (21).

6. The gas bearing according to claim 4, wherein a plurality of the strip-shaped dampers (4), a plurality of the first strip-shaped grooves (12), and a plurality of the second strip-shaped grooves (21) are same in number, and are distributed and spaced apart in a circumferential direction.

7. The gas bearing according to claim 1, further comprising two end caps (5), wherein the two end caps (5) are provided on both end faces of the housing (1) respectively.

8. The gas bearing according to claim 7, wherein each of the two end caps (5) is provided with a plurality of arc-shaped grooves (51) running from one end face to the other end face of the end cap (5), and the plurality of arc-shaped grooves (51) are spaced apart in a circumferential direction.

9. The gas bearing according to claim 7, wherein the end caps (5) are threadedly connected to the housing (1).
